# EUROPEAN PATENT APPLICATION

(11) **EP 4 407 722 A1**
(43) Date of publication of application: **31.07.2024**
(21) Application number: 22898912.5
(22) Date of filing: 11.11.2022
(51) Int. Cl.: H01M 8/1004, H01M 4/86, H01M 8/10

(54) **MEMBRANE-ELECTRODE ASSEMBLY FOR FUEL CELL, COMPRISING PLATE-SHAPED POROUS SILICA, AND FUEL CELL COMPRISING SAME**

(30) Priority: 26.11.2021 KR 20210165956
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah-Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Ter Meer Steinmeister & Partner
(86) International application number: PCT/KR2022/017755
(87) International publication number: WO 2023/096230

(57) **Abstract**

The present invention relates to a membrane-electrode assembly for a fuel cell and a fuel cell comprising same and, more particularly, to a membrane-electrode assembly for a fuel cell and a fuel cell comprising same, the membrane-electrode assembly for a fuel cell including plate-shaped porous silica in a catalyst layer and thus enhancing the performance of a fuel cell in a low-humidity environment.

## Description

### [TECHNICAL FIELD]

The present disclosure relates to a membrane-electrode assembly for a fuel cell with improved performance in a low-humidity environment.

### [BACKGROUND ART]

A fuel cell is a battery equipped with a power generation system that directly converts chemical reaction energy, such as an oxidation/reduction reaction of hydrogen and oxygen contained in hydrocarbon-based fuel materials (e.g., methanol, ethanol, and natural gas), into electrical energy. Due to high energy efficiency and an environment-friendly characteristic with low emissions of pollutants, the fuel cell is attracting attention as a next-generation clean energy source that can replace fossil energy.

Such a fuel cell has an advantage in that it can generate a wide range of output in a stack configuration by stacking unit cells, and has been highlighted as a small and mobile portable power source because it shows an energy density 4 to 10 times higher than that of a small lithium battery.

A stack that substantially generates electricity in a fuel cell is a stack of several to dozens of unit cells consisting of a membrane-electrode assembly (MEA) and a separator (also called a bipolar plate), and the membrane-electrode assembly generally has a structure in which an oxidizing electrode (an anode or a fuel electrode) and a reducing electrode (a cathode or an air electrode) are respectively formed on both sides with the electrolyte membrane disposed therebetween.

Fuel cells can be classified into alkaline electrolyte fuel cells, polymer electrolyte membrane fuel cells (PEMFC), *etc.*, depending on the type of electrolyte membrane, and among them, the polymer electrolyte membrane fuel cells, due to advantages, such as a low operating temperature of below 100°C, fast start-up and response characteristics, excellent durability, *etc.*, has been highlighted as a power supply for portables, vehicles, and household.

Representative examples of the polymer electrolyte membrane fuel cells comprise a proton exchange membrane fuel cell (PEMFC) that uses hydrogen gas as fuel, a direct methanol fuel cell (DMFC) that uses liquid methanol as fuel, *etc.*

Summarizing the reactions occurring in the polymer electrolyte membrane fuel cell, first, when a fuel such as hydrogen gas is supplied to an oxidizing electrode, hydrogen ions (H⁺) and electrons (e⁻) are generated by the oxidation reaction of hydrogen at the oxidizing electrode. The hydrogen ions generated are transferred to a reducing electrode through the ion exchange membrane, and the electrons generated are transferred to the reducing electrode through an external circuit. Oxygen gas is supplied from the reducing electrode, and oxygen is combined with hydrogen ions and electrons to generate water by a reduction reaction of oxygen.

Meanwhile, in order to apply a fuel cell to fuel cell vehicles (FCVs), miniaturization of the fuel cell system is essential, and for this purpose, there is a need for the development of a membrane electrode assembly (MEA) capable of exhibiting excellent power density per unit area, and in particular, it is necessary to increase the durability of the MEA catalyst layer for practical operation of FCVs.

### [DETAILED DESCRIPTION OF INVENTION]

### [TECHNICAL PROBLEMS]

An object of the present disclosure is to provide a membrane-electrode assembly with improved mass transfer efficiency and performance and durability in a low-humidity environment by introducing nanostructured porous silica into a part of the electrode layer.

Another object of the present disclosure is to provide a fuel cell with improved performance and durability in a low-humidity environment by applying the membrane-electrode assembly structure.

### [TECHNICAL SOLUTION]

In order to achieve the above objects, the membrane-electrode assembly for a fuel cell according to an embodiment of the present disclosure comprises a first catalyst layer, which comprises plate-shaped porous silica, and a polymer electrolyte membrane.

The plate-shaped porous silica may comprise mesopores in a form perpendicular to the plate-shaped shape.

The plate-shaped porous silica may have pores with a diameter of 2 nm to 40 nm.

The plate-shaped porous silica may have a size of 50 nm to 2,000 nm and a thickness of 30 nm to 300 nm.

In the first catalyst layer, the plate-shaped porous silica may be comprised in an amount of 1 wt% to 20 wt% based on the total weight of the first catalyst layer.

The ionomer content of the first catalyst layer may be 34 wt% to 40 wt% based on the total weight of the first catalyst layer.

The thickness of the first catalyst layer may be 0.2 µm to 5 µm.

The first catalyst layer may be disposed between the polymer electrolyte membrane and a second catalyst layer which does not comprise or comprises a smaller amount of plate-shaped porous silica.

The ionomer content of the first catalyst layer may be greater than the ionomer content of the second catalyst layer.

A fuel cell according to another embodiment of the present disclosure comprises the fuel cell membrane-electrode assembly.

### [EFFECT OF INVENTION]

In the membrane-electrode assembly of the present invention, the catalyst layer can effectively contain moisture being discharged from the electrolyte membrane through the pores of the plate-shaped porous silica, and thus can solve the problem of reduced ion conductivity caused by drying of the electrolyte membrane in a low-humidity environment.

### [BRIEF DESCRIPTION OF THE DRAWING]

FIG. 1 is a drawing showing one shape of plate-shaped porous silica.
FIG. 2 is a schematic diagram wing a structure in which plate-shaped porous silica is comprised in a first catalyst layer.
FIG. 3 is a schematic diagram showing the overall configuration of the fuel cell.
FIG. 4 is an image taken through a transmission electron microscope (TEM) of the plate-shaped porous silica used in an embodiment of the present disclosure.
FIG. 5 is an image observed under an optical microscope of the surfaces of the first electrode layer and the second electrode layer prepared through an embodiment of the present disclosure.
FIG. 6 is the evaluation result of low humidification performance of membrane-electrode assemblies (MEAs) prepared according to Examples and Comparative Examples of the present disclosure.

### [BEST MODE FOR CARRYING OUT THE INVENTION]

Hereinafter, embodiments of the present disclosure will be described in detail with reference to the drawings so that those skilled in the art can easily practice the present disclosure. However, the present disclosure may be embodied in many different forms and is not limited to the embodiments described herein.

A fuel cell membrane-electrode assembly according to one aspect of the present disclosure is characterized in that the catalyst layer comprises plate-shaped porous silica. A catalyst layer including plate-shaped porous silica may be formed on only one surface of the polymer electrolyte membrane, but a catalyst layer including plate-shaped porous silica may be formed on both surfaces.

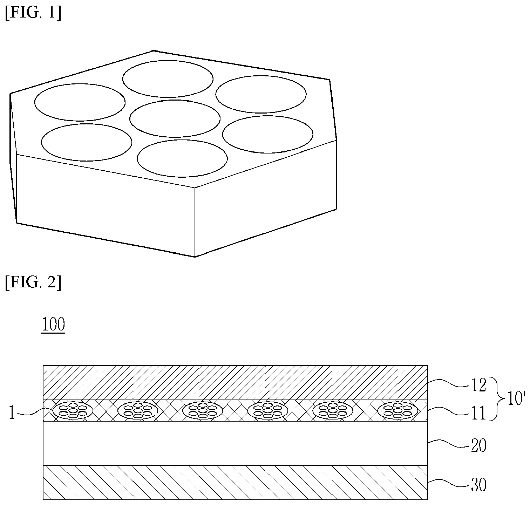

FIG. 1 is a drawing showing one shape of plate-shaped porous silica. Referring to FIG. 1, the catalyst layer including plate-shaped porous silica is disposed to be in contact with the electrolyte membrane and can effectively contain moisture through the pores of the silica, thereby capable of inhibiting the evaporation of moisture in the polymer electrolyte membrane, and can help the polymer electrolyte membrane and the catalyst layer to maintain excellent ion conductivity by maintaining appropriate humidity in a low-humidity environment.

The mesopores of the plate-shaped porous silica may have a form to be perpendicular to the plate-shaped shape (in the same direction as the thickness direction). If the mesopores of the plate-shaped porous silica have a plate-shaped shape and a vertical pore shape, mass transfer may be facilitated and performance may be further improved by having an arrangement of pores perpendicular to the electrolyte membrane. If the mesopores of the plate-shaped porous silica have a horizontal shape to the plate-shaped shape, when the electrode is formed in the same shape as the existing mesoporous silica, the arrangement of pores may be parallel to the electrolyte membrane, and thus mass transfer may be inhibited and performance may be reduced.

The plate-shaped porous silica may be mesoporous silica, and may specifically be plate-shaped porous silica having pores with a diameter of 2 nm to 40 nm, 4 nm to 30 nm, and 6 nm to 20 nm. When the pore diameter of the silica is smaller than 2 nm, moisture cannot easily penetrate due to the extremely small pores, ion transfer through the pores is limited, the moisture-containing property due to the porous silica may be rather deteriorated, and when the pore diameter of the silica is larger than 40 nm, the moisture which has penetrated into the pores does not stay in the pores for a long time and may easily be evaporated, and thus the improvement of performance in a low-humidity environment according to the porous silica may be insignificant.

The size of the plate-shaped porous silica may preferably be 50 nm to 2,000 nm, 100 nm to 1,500 nm, 150 nm to 1,000 nm, or 200 to 800 nm. In particular, the size of the porous silica means the maximum length of the plate-shaped area. When the size of the porous silica is larger than the above range, the catalyst and the ionomer of the catalyst layer may not be evenly dispersed and arranged due to the silica that does not participate in the chemical reaction in the catalyst layer, and the content may decrease, thereby resulting in a decrease in the chemical reaction efficiency of the catalyst layer. Additionally, when the size of the porous silica is smaller than the above range, it may not be easy to arrange the pores in a direction perpendicular to the electrolyte membrane, which may cause a problem of inhibiting mass transfer.

The thickness of the plate-shaped porous silica may preferably be 30 nm to 300 nm, 40 nm to 250 nm, or 50 nm to 200 nm. When the thickness of the plate-shaped porous silica is thinner than the above range, the porous silica structure may easily be damaged by a weak physical external impact and may easily damaged during dispersion and thus there may be no difference from the addition of amorphous silica, whereas when the thickness of the plate-shaped porous silica is thicker than the above range, the depth of the porous silica may become unnecessarily deeper than the depth that the moisture can penetrate through the pores, and the porous silica may unnecessarily occupy a large volume in the catalyst layer, thereby merely reducing the efficiency of the catalyst layer.

The plate-shaped porous silica may be prepared using a conventional method for preparing porous silica by hydrolysis and condensation reactions and Firing treatment. However, as a mold for forming a plate-shape, for example, a block copolymer consisting of a water-soluble block and a hydrophilic block may be used, and the mold may be hydrolyzed together with a silica precursor and an acidic catalyst. As the block copolymer, for example, Pluronic P123, Pluronic F127, *etc.* may be used. As the silica precursor, tetramethyl orthosilicate, tetraethyl orthosilicate, tetrapropyl orthosilicate, tetrabutyl orthosilicate, or a mixture thereof may be used, but is not limited thereto. As the acidic catalyst, HCl, acetic acid, nitric acid, sulfuric acid, *etc.* may be used. The hydrolysis, condensation, and Firing conditions may appropriately be selected by those skilled in the art from ordinary conditions in consideration of reaction conditions, states, *etc.*

FIG. 2 is a schematic diagram of a structure of a membrane electrode-assembly 100 for a fuel cell according to an embodiment of the present disclosure. Referring to FIG. 2, the pores of the plate-shaped porous silica 1 are preferably formed in a direction perpendicular to the plane of the electrolyte membrane 20 in the first catalyst layer 11 including the silica 1. When the porous silica 1 is arranged such that the pores of the plate-shaped porous silica 1 are arranged to be perpendicular to the plane of the electrolyte membrane 20, the pores may effectively contain moisture discharged from the electrolyte membrane 20, and mass transfer may be facilitated, and thus, the wet environment of the electrolyte membrane 20 may be more effectively maintained.

Plate-shaped porous silica may help maintain a wet environment in the membrane-electrode assembly in a low-humidity environment, but it is not directly involved in the oxidation-reduction reaction of the catalyst layer or is not directly involved in the conduction of hydrogen ions; therefore, it is important that the plate-shaped porous silica be comprised in an appropriate proportion in the catalyst layer. Specifically, in the first catalyst layer, the plate-shaped porous silica is preferably comprised in an amount of 1 wt% to 20 wt% based on the total weight of the first catalyst layer. When the plate-shaped porous silica is comprised less than 1 wt% in the first catalyst layer, the effect of maintaining a wet environment due to the porous silica may be insignificant, whereas when the plate-shaped porous silica is comprised more than 20 wt% in the first catalyst layer, the oxidation-reduction reaction due to the catalyst of the catalyst layer may not occur sufficiently, which may rather decrease the fuel cell efficiency.

The first catalyst layer including the plate-shaped porous silica contains ionomers, and it is preferable that the catalyst layer comprise a larger amount of ionomers for the purpose of smooth conduction of hydrogen ions compared to a general catalyst layer not including general porous silica. Specifically, the content of the ionomers in the first catalyst layer is preferably 34 wt% to 40 wt% based on the total weight of the first catalyst layer. When the ionomer content in the first catalyst layer is higher than the above range, the fuel supply to the active site of the platinum catalyst may be inhibited, whereas when the ionomer content in the first catalyst layer is too low, the ion transfer ability of the catalyst layer may be deteriorated.

The ionomer may comprise one or more ionomers selected from the group consisting of fluorine-based ionomers and hydrocarbon-based ionomers. As the hydrocarbon-based ionomer, all known hydrocarbon-based polymers may be used, for example, sulfonated derivatives of poly(arylene ether)s (SPAEs), poly(arylene sulfide)s (SPASs), polyimides (SPIs), polybenzimidazoles (PBIs)), polyphenylenes (PPs), and polyetheretherketone (PEEK). Additionally, as the fluorine-based polymer, all known fluorine-based polymers may be used, for example, one of perfluorine-based sulfonic acid, polyvinylidene fluoride, hexafluoropropylene, trifluoroethylene, polytetrafluoroethylene, or a copolymer thereof may be used.

However, it is preferable that the ionomers comprised in the catalyst layer together with the plate-shaped porous silica have an equivalent weight (EW) of 600 to 1,200 for effective ionic conductivity of the catalyst layer.

It is preferable that the thickness of the first catalyst layer including the plate-shaped porous silica be specifically 0.2 µm to 5 µm. When the thickness of the first catalyst layer is less than 0.2 µm, the catalyst layer may be so thin that the platy porous silica may not be sufficiently contained inside the catalyst layer, and even when the platy porous silica is comprised in the catalyst layer, the chemical reaction of the catalyst layer may not sufficiently occur. In contrast, when the thickness of the first catalyst layer is greater than 5 µm, the chemical reaction of the catalyst may not occur due to the volume occupied by the porous silica rather than the efficiency of the fuel cell, which is improved by creating a wet environment due to the inclusion of the plate-shaped porous silica, thereby resulting in a further reduction of efficiency.

Therefore, in order to further improve the efficiency of the catalyst layer, the first catalyst layer including plate-shaped porous silica may be formed only at the portion in contact with the polymer electrolyte membrane, and a structure in which a catalyst layer including no or a less amount of porous silica is additionally stacked may be applied.

The first catalyst layer may be disposed between the second catalyst layer and the polymer electrolyte membrane. In particular, the second catalyst layer does not comprise or comprise a less amount of the plate-shaped porous silica, and it is more preferable in terms of battery performance that the second catalyst layer does not comprise or comprise a less amount of the plate-shaped porous silica. When the second catalyst layer comprises plate-shaped porous silica, the content should be less than that of the first catalyst layer, and it may be less by 1 wt% or more, for example, may be less by 1 wt% to 20 wt%, specifically by 5 wt% or more, and more specifically by 10 wt% or more compared to that of the first catalyst layer. FIG. 2 briefly shows a membrane-electrode assembly 100 according to an embodiment of the present disclosure, in which the catalyst layer 10 having a multi-layer structure is formed such that the first catalyst layer 11 is formed on one surface of the polymer electrolyte membrane 20, and the second catalyst layer 12, in which the plate-shaped porous silica is not comprised or comprised in a smaller amount, is stacked on the first catalyst layer 11. FIG. 2 merely discloses a membrane-electrode assembly 100 in which the catalyst layer 10 including the first catalyst layer 11 is formed on one surface, but the membrane-electrode assembly 100 may be one in which a plurality of catalyst layers may be formed on both surfaces of the polymer electrolyte membrane, and the catalyst layer 10 including the first catalyst layer 11 may be a cathode electrode or anode electrode, but is not particularly limited thereto.

Although the hydrogen ion conduction path may become longer in the catalyst layer due to the plate-shaped porous silica, the hydrogen ion conduction may be more smoothly performed when the ionomers penetrate into the pores of the silica due to the porous structure of the silica. Therefore, it is preferable that the ionomer content of the first catalyst layer 11 in the catalyst layer 10 be greater than that of the second catalyst layer 12 so that the ionomers can easily be disposed in the pores of the silica together with an increase of the bonding strength between the catalyst layer and the electrolyte membrane, but the present disclosure is not limited thereto.

The catalyst layer comprises a catalyst, and as a catalyst, any catalyst that participates in the reaction of a cell and can be used as a catalyst for a fuel cell may be used. Specifically, it is preferable that a platinum-based metal be used.

The platinum-based metal may comprise, for example, any one selected from the group consisting of platinum (Pt), palladium (Pd), ruthenium (Ru), iridium (Ir), osmium (Os), a platinum-M alloy (in which M is any one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh)), a non-platinum alloy, and a combination thereof, and more preferably, a combination of two or more metals selected from the platinum-based catalytic metal group may be used, but is not limited thereto, and any platinum-based catalytic metal that can be used in the art may be used without limitation.

Specifically, as the platinum alloy, two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and a combination thereof may be used alone or in combination.

Additionally, as the non-platinum alloy, one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, and a combination thereof may be used.

As the catalyst, the catalyst may be used as-is (black) or it may be used by being supported on a carrier.

The carrier may be selected from carbon-based carriers, porous inorganic oxides (e.g., zirconia, alumina, titania, silica, ceria, *etc.*), zeolites, *etc.* The carbon-based carrier may be selected from graphite, super P, carbon fiber, carbon sheet, carbon black, Ketjen black, Denka black, acetylene black, carbon nanotube (CNT), carbon sphere, carbon ribbon, fullerene, activated carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, a combination of one or more these, but is not limited thereto, and any carrier that can be used in the art may be used without limitation.

The catalyst particles may be disposed on the surface of the carrier, or may penetrate into the carrier while filling internal pores of the carrier.

In the case where a precious metal supported on the carrier is used as a catalyst, a commercially available catalyst may be used, or it may be prepared and used by supporting a precious metal on a carrier. Since the process of supporting a precious metal on a support is widely known in the art, it can easily be understood by those skilled in the art even though detailed descriptions thereof are omitted in this specification.

The catalyst particles may be contained in an amount of 20 wt% to 80 wt% based on the total weight of the catalyst layers (10, 30), in which when the catalyst particles are contained less than 20 wt%, there may be a problem in that the activity may decrease, whereas when the content of the catalyst particles exceeds 80 wt%, the active area thereof may decrease due to the aggregation of the catalyst particles, and thus the catalytic activity may decrease.

In addition, the catalyst layers (10, 30) may comprise a binder to improve the adhesion of the catalyst layers (10, 30) and delivery of hydrogen ions. As the binder, it is preferable to use an ionomer having ion conductivity, and since the descriptions with respect to the ionomer are as described above, repeated descriptions are omitted herein.

However, the ionomer may be used in the form of a single material or a mixture, and may optionally be used together with a non-conductive compound for the purpose of further improving adhesion to the polymer electrolyte membrane 50. It is preferable that the amount of the ionomer to be used be adjusted to comply with the purpose of use.

As the non-conductive compound, one or more selected from the group consisting of polytetrafluoroethylene (PTFE), a tetrafluoroethylene-hexafluoropropylene copolymer (FEP), a tetrafluoroethylene-perfluoroalkylvinyl ether copolymer (PFA), ethylene/tetrafluoroethylene (ETFE), an ethylenechlorotrifluoro-ethylene copolymer (ECTFE), polyvinylidene fluoride, a polyvinylidene fluoride-hexafluoropropylene copolymer (PVdF-HFP), dodecylbenzenesulfonic acid, and sorbitol may be used.

The binder may be comprised in an amount of 20 wt% to 80 wt% based on the total weight of the catalyst layers (10, 30). When the content of the binder is less than 20 wt%, the ions generated may not be well delivered, whereas when the content exceeds 80 wt%, it is difficult to supply hydrogen or oxygen (air) due to lack of pores and thus an active area that can react may decrease.

As the electrode substrate, a porous conductive substrate may be used so that hydrogen or oxygen can be smoothly supplied. Representative examples thereof may comprise carbon paper, carbon cloth, carbon felt, or metal cloth (a porous film consisting of a fibrous metal cloth or a metal film formed on the surface of a cloth formed of polymer fibers), but is not limited thereto. In addition, as the electrode substrates (40, 40'), it is preferable to use those subjected to repellency treatment with a fluorine-based resin so as to prevent the decrease of diffusion efficiency of reactants due to the water generated during the operation of a fuel cell. As the fluorine-based resin comprise polytetrafluoroethylene, polyvinylidene fluoride, polyhexafluoropropylene, polyperfluoroalkylvinyl ether, polyperfluorosulfonylfluoride alkoxyvinyl ether, fluorinated ethylene propylene, polychlorotrifluoroethylene, or a copolymer thereof may be used.

In addition, a microporous layer for enhancing the diffusion effect of the reactants in the electrode substrates may be further comprised. This microporous layer may generally comprise conductive powder having a small particle size, such as carbon powder, carbon black, acetylene black, activated carbon, carbon fiber, fullerene, carbon nanotube, carbon nanowire, carbon nanohorn, and a carbon nanoring.

The microporous layer is prepared by coating the electrode substrates with a composition which comprises a conductive powder, a binder resin, and a solvent. As the binder resin, polytetrafluoroethylene, polyvinylidene fluoride, polyhexafluoropropylene, polyperfluoroalkylvinyl ether, polyperfluorosulfonylfluoride, alkoxyvinyl ether, polyvinyl alcohol, cellulose acetate. or copolymers of these, *etc.* may be preferably used. As the solvent, alcohols (e.g., ethanol, isopropyl alcohol, n-propyl alcohol, butyl alcohol, *etc.*), water, dimethylacetamide, dimethylsulfoxide, N-methylpyrrolidone, tetrahydrofuran, *etc.* may preferably be used.

As the coating process, a screen printing method, a spray coating method, or a coating method using a doctor blade may be used depending on the viscosity of the composition, but is not limited thereto.

A fuel cell according to another embodiment of the present disclosure comprises the membrane-electrode assembly.

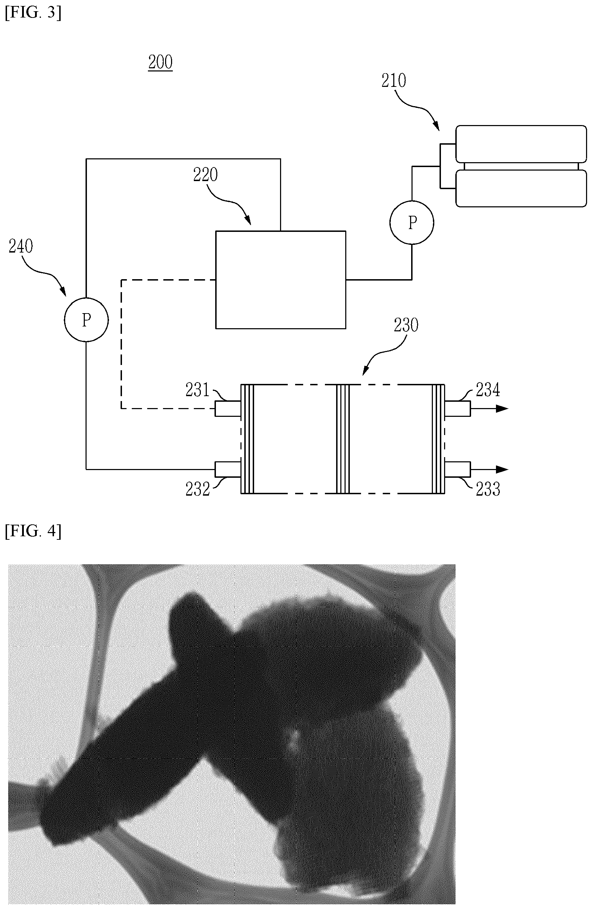

FIG. 3 is a schematic diagram showing the overall configuration of the fuel cell according to an embodiment of the present disclosure.

Referring to FIG. 3, the fuel cell 200 according to the present disclosure comprises a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which supplies the oxidizing agent to the reforming unit 220 and the stack 230.

The stack 230 is provided with a plurality of unit cells which generate electrical energy by inducing an oxidation/reduction reaction between the reformed gas including hydrogen gas supplied from the reforming unit 220 and the oxidizing agent supplied from the oxidizing agent supplying unit 240.

Each unit cell, which refers to a unit cell that generates electricity, comprises the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate is provided with a pipe-shaped first supply pipe 231 for injecting the reformed gas including hydrogen gas supplied from the reforming unit 220; and a pipe-shaped second supply pipe 232 for injecting oxygen gas; and the other end plate is provided with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

In the fuel cell, since the separator, the fuel supply unit, and the oxidizing agent supply unit constituting the electricity generation unit are used in a conventional fuel cell, a detailed description thereof will be omitted herein.

### [Detailed Description for Carrying Out the Invention]

Hereinafter, specific embodiments of the present disclosure are presented. However, the present disclosure may be embodied in many different forms and is not limited to the embodiments described herein.

### [Example 1]

After dissolving 0.32 g of ZrOCl₂·8H₂O and 2.0 g of Pluronic P123 in a 2.0 M HCl aqueous solution, 4.2 g of tetraethylorthosilicate (TEOS) was added thereto, and the mixture was subjected to hydrolysis at 35°C for 30 minutes. Additionally, 1.0 g of trimethylbenzene (TMB) was added to the mixed solution, and the mixture was subjected to hydrolysis and condensation polymerization at 35°C for 12 hours, followed by hydrothermal treatment at 90°C for 5 hours and calcined at 550°C for 5 hours to thereby prepare plate-shaped mesoporous silica, SBA.

A membrane-electrode assembly was prepared according to a conventional preparation method except that a cathode was formed using a first catalyst layer containing 5 wt% of the plate-shaped porous silica and a second catalyst layer not containing silica. In particular, the total thickness of the catalyst layer was 15 µm, and the thickness of the first catalyst layer was 3 µm. As the ionomer, Nafion was used, and a platinum catalyst was used.

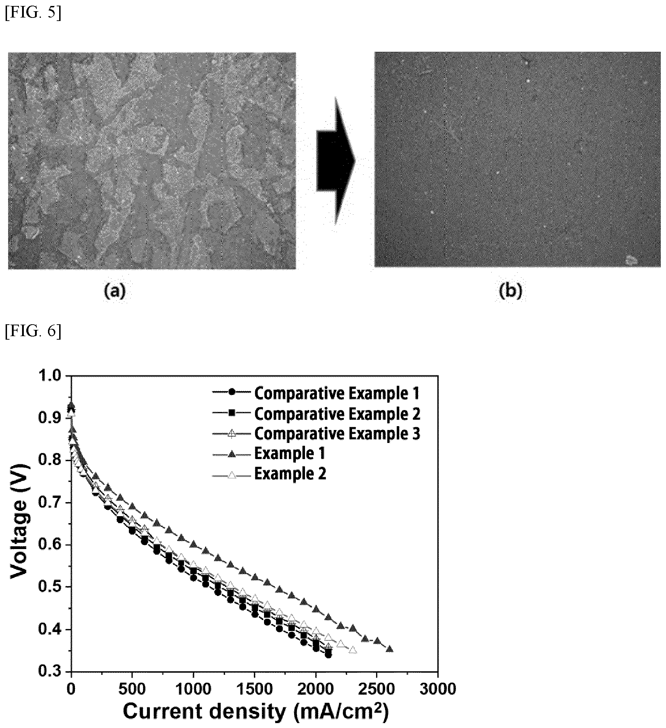

FIG. 5 shows optical microscopic images of Example 1 of (a) after forming the first electrode layer, and (b) after forming the second electrode layer on the first electrode layer. Referring to FIG. 1, after forming the first electrode layer (a), when the size of the plate-shaped porous silica is large, the surface of the first electrode layer may have a concavo-convex shape. On the surface of the first electrode layer having a concave-convex shape, a portion including porous silica is high and a portion not including porous silica is relatively low, and such a concave-convex shape can help improve the performance and durability of the membrane-electrode assembly.

### [Example 2]

A membrane-electrode assembly was prepared in the same manner as in Example 1, except that the second catalyst layer was not used.

### [Comparative Example 1]

A membrane-electrode assembly was prepared the same manner as in Example 1, except that spherical silica (50 nm) was used for the first catalyst layer.

### [Comparative Example 2]

After dissolving 2.0 g of Pluronic P123 in a 2.0 M HCl aqueous solution, 4.2 g of tetraethylorthosilicate (TEOS) was added thereto, and the mixture was subjected to hydrolysis and condensation polymerization at 35°C for 12 hours, and then calcined at 550°C for 5 hours to thereby prepare conventional mesoporous silica (not plate-shaped).

A membrane-electrode assembly was prepared in the same manner as in Example 1, except that the above-prepared mesoporous silica was used in the first catalyst layer.

### [Comparative Example 3]

A membrane-electrode assembly was prepared in the same manner as in Example 1, except that 20 wt% of plate-shaped mesoporous silica was comprised in the second catalyst layer.

**[Table 1]**

| | Example 1 | Example 2 | Comparative Example 1 | Comparative Example 2 | Comparative Example 3 |
|---|---|---|---|---|---|
| Type of silica comprised in the first catalyst layer | platelet SBA-15¹⁾ | platelet SBA-15¹⁾ | spherical silica (50 nm) | general SBA-15²⁾ | platelet SBA-15¹⁾ |
| Silica content of the first catalyst layer (wt%) | 5 | 5 | 5 | 5 | 5 |
| Presence or absence of the second catalyst layer | O | X | O | O | O |
| Silica content of the second catalyst layer (wt%) | 0 | - | 0 | 0 | 20 (platelet SBA-15¹⁾) |
| 1) Plate-shaped porous silica (size: 500 nm; thickness: 80 nm; and pore: 15 nm) | | | | | |
| 2) Porous silica (size: 1,500 nm; thickness: 400 nm; and pore: 7 nm) | | | | | |

### [Experimental Example: Membrane-electrode assembly performance comparison]

The performance of the membrane-electrode assembly according to the configuration of Table 1 in a low-humidity environment (temperature: 80°C, humidity: RH 30%) was evaluated and shown in FIG. 6. Referring to FIG. 6, in a low-humidity environment, compared to Comparative Examples 1, 2, and 3, the voltage according to the current density of Examples 1 and 2 was measured to be significantly higher. Particularly in the case of Example 1 including the second electrode layer, it can be seen that the voltage is superior even in the same current density, thus showing an excellent increase of the effect of the membrane-electrode assembly.

Although the preferred embodiments of the present disclosure have been described in detail above, the scope of the present disclosure is not limited thereto, and various modifications and improvements of those skilled in the art using the basic concept of the present disclosure defined in the following claims also fall within the scope of rights of the present disclosure.

### [Description of Reference Numerals]

| | | | |
|---|---|---|---|
| 100: | membrane-electrode assembly | | |
| 1: | plate-shaped porous silica | | |
| 10, 30: | electrode | | |
| 11: | first catalyst layer | 12: | second catalyst layer |
| 20: | polymer electrolyte membrane | | |
| 200: | fuel cell | 210: | fuel supply unit |
| 220: | reforming unit | 230: | stack |
| 231: | first supply pipe | 232: | second supply pipe |
| 233: | first discharge pipe | 234: | second discharge pipe |
| 240: | oxidizing agent supply unit | | |

## Claims

1. A membrane-electrode assembly for a fuel cell comprising:
a first catalyst layer comprising plate-shaped porous silica; and
a polymer electrolyte membrane.

2. The membrane-electrode assembly for a fuel cell of claim 1, wherein the plate-shaped porous silica comprises mesopores in a form perpendicular to the plate-shaped shape.

3. The membrane-electrode assembly for a fuel cell of claim 1, wherein the plate-shaped porous silica has pores with a diameter of 2 nm to 40 nm.

4. The membrane-electrode assembly for a fuel cell of claim 1, wherein the plate-shaped porous silica has a size of 50 nm to 2,000 nm.

5. The membrane-electrode assembly for a fuel cell of claim 1, wherein the plate-shaped porous silica has a thickness of 30 nm to 300 nm.

6. The membrane-electrode assembly for a fuel cell of claim 1, wherein the plate-shaped porous silica in the first catalyst layer is comprised in an amount of 1 wt% to 20 wt% based on the total weight of the first catalyst layer.

7. The membrane-electrode assembly for a fuel cell of claim 1, wherein the ionomer content of the first catalyst layer is 34 wt% to 40 wt% based on the total weight of the first catalyst layer.

8. The membrane-electrode assembly for a fuel cell of claim 1, wherein the first catalyst layer has a thickness of 0.2 µm to 5 µm.

9. The membrane-electrode assembly for a fuel cell of claim 1, wherein the first catalyst layer is disposed between a second catalyst layer, which comprises no or a smaller amount of plate-shaped porous silica, and the polymer electrolyte membrane.

10. The membrane-electrode assembly for a fuel cell of claim 9, wherein the ionomer content of the first catalyst layer is greater than the ionomer content of the second catalyst layer.

11. A fuel cell comprising the membrane-electrode assembly according to any one of claims 1 to 10.
